Europäisches Patentamt
European Patent Office
Office européen des brevets

(11) Numéro de publication: **0 348 317 A1**

# (12) DEMANDE DE BREVET EUROPEEN

(21) Numéro de dépôt: **89420228.2**

(22) Date de dépôt: **22.06.89**

(51) Int. Cl.[4]: **C 07 F 9/145**
C 08 G 79/04, C 08 L 27/04,
C 08 K 5/52

(30) Priorité: **24.06.88 FR 8808784**

(43) Date de publication de la demande:
**27.12.89 Bulletin 89/52**

(84) Etats contractants désignés:
**AT BE CH DE ES FR GB GR IT LI LU NL SE**

(71) Demandeur: **RHONE POULENC CHIMIE**
**25 Quai Paul Doumer**
**F-92408 Courbevoie Cédex (FR)**

(72) Inventeur: **Gay, Michel**
**11, rue Garibaldi**
**F-69006 Lyon (FR)**

(74) Mandataire: **Vignally, Noel et al**
**Rhône-Poulenc Chimie Service Brevets Chimie Centre**
**de Recherches des Carrières B.P. 62**
**F-69192 Saint-Fons Cédex (FR)**

Revendication pour l'Etat contractant suivant: ES

(54) **Nouveaux polyphosphites et leur utilisation comme stabilisants des polymères halogénés.**

(57) La présente invention a trait à de nouveaux polyphosphites organiques.

Ces nouveaux polyphosphites répondent à la formule générale (I)

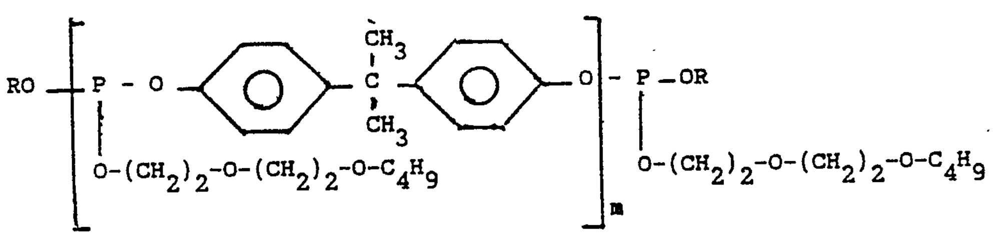

(I)

dans laquelle :
- m représente un nombre de 1 à 10 ;
- R représente :
. un radical (butoxy-2 éthoxy)-2 éthyle
. un radical phényle
. un radical alkylphényle, le ou les substituants alkyles ayant 1 à 12 atomes de carbone.

Ces polyphosphites peuvent servir à stabiliser des polymères halogénés. Ils peuvent être utilisés conjointement avec des stabilisants primaires et des stabilisants organiques.

EP 0 348 317 A1

**Description**

## NOUVEAUX POLYPHOSPHITES ET LEUR UTILISATION COMME STABILISANTS DES POLYMERES HALOGENES

La présente invention a trait à de nouveaux polyphosphites organiques.

Elle porte également sur l'utilisation de ces nouveaux polyphosphites pour la stabilisation des polymères halogénés.

Le brevet américain n° 3 375 304 décrit des polyphosphites essentiellement aromatiques et leur utilisation comme stabilisants du chlorure de polyvinyle. Ce brevet ne comporte pas de résultats chiffrés de l'action stabilisante de ces polyphosphites et ne permet pas de comparer leur efficacité par rapport à celle d'autres phosphites antérieurs, tels que les phosphites de phényle ou de phényle substitués utilisés couramment.

La demande de brevet JP-A-744/1980 décrit l'utilisation de polyphosphites dans des compositions stabilisantes pour polymères chlorés. La définition de ces polyphosphites est très large ; leur formule générale est la suivante :

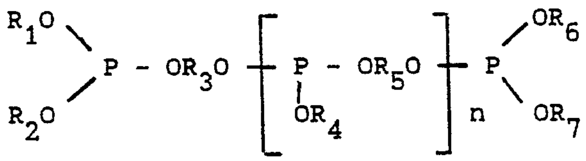

les différents substituants représentant pratiquement tout radical hydrocarboné, puisqu'ils peuvent être, indépendamment les uns des autres, des radicaux, monovalents ou divalents selon leur position, aliphatiques, aromatiques, cycloaliphatiques ou spiranniques.

Parmi ces innombrables familles de polyphosphites aux propriétés très différentes, il a été trouvé une famille beaucoup plus restreinte et beaucoup plus homogène.

Ces nouveaux polyphosphites répondent à la formule générale (I)

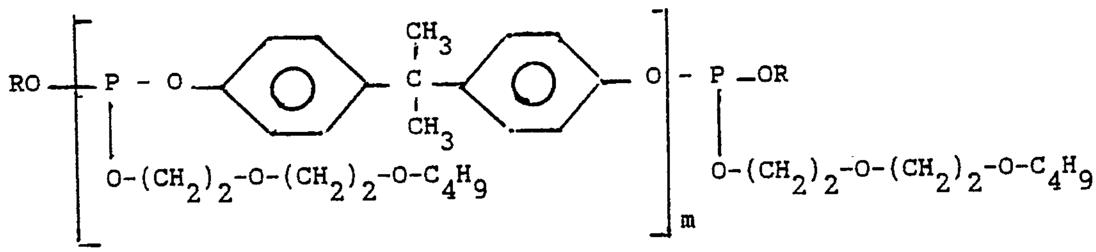

(I)

dans laquelle :

- m représente un nombre de 1 à 10 ;
- R représente :
  . un radical (butoxy-2 éthoxy)-2 éthyle
  . un radical phényle
  . un radical alkylphényle, le ou les substituants alkyles ayant 1 à 12 atomes de carbone.

Parmi ces nouveaux polyphosphites, on peut citer plus particulièrement les composés de formule générale (I) dans laquelle :

- m représente un nombre de 1 à 5 ;
- R représente :
  . un radical (butoxy-2 éthoxy)-2 éthyle
  . un radical phényle
  . un radical phényle portant 1 ou 2 substituants tels que méthyle, éthyle, propyle, isopropyle, n-butyle, isobutyle, tertiobutyle, hexyles, octyles, nonyles, décyles et dodécyles.

A titre d'exemples des polyphosphites de formule (I) on peut citer notamment :

- le diphosphite de diphényle, bis((butoxy-2 éthoxy)-2 éthyle) et 4,4'-isopropylidènediphényle ;
- le diphosphite de tétrakis((butoxy-2 éthoxy)-2 éthyle) et 4,4'-isopropylidènediphényle ;
- le triphosphite de diphényle, tris((butoxy-2 éthoxy)-2 éthyle) et bis(4,4'-isopropylidènephényle) ;
- le tétraphosphite de diphényle, tétrakis((butoxy-2 éthoxy)-2 éthyle) et tris(4,4'-isopropylidènediphényle) ;
- le pentaphosphite de diphényle, pentakis((butoxy-2 éthoxy)-2 éthyle) et tétrakis(4,4'-isopropylidènediphényle) ;
- l'hexaphosphite de diphényle, hexakis((butoxy-2 éthoxy)-2 éthyle) et pentakis(4,4'-isopropylidènediphényle) ;
- le triphosphite de pentakis((butoxy-2 éthoxy)-2 éthyle) et bis(4,4'-isopropylidènediphényle) ;
- le tétraphosphite d'hexakis((butoxy-2 éthoxy)-2 éthyle) et tris(4,4'-isopropylidènediphényle) ;
- le diphosphite de bis(ditertiobutyl-2,4 phényle), bis((butoxy-2 éthoxy)-2 éthyle) et 4,4'-isopropylidènediphényle ;

- le diphosphite de bis(ditertiobutyl-2,6 phényle), bis((butoxy-2 éthoxy)-2 éthyle) et 4,4'-isopropylidènediphényle.

Ces polyphosphites de l'invention peuvent être préparés de manière connue en soi, par exemple par des procédés tels que ceux décrits dans le brevet européen n° 0 033 395. On peut notamment faire réagir à chaud, généralement entre 80 et 200° C, un phosphite de triphényle, avec du bis-(hydroxy-4 phényl)-2,2 propane (ou bisphénol A) et du (butoxy-2 éthoxy)-2 éthanol et éventuellement un alkylphénol, en présence d'un catalyseur de transestérification.

La valeur de m dépend des rapports de réactifs adoptés et plus particulièrement du rapport molaire bisphénol A/produits monohydroxylés ((butoxy-2 éthoxy)-2 éthanol et alkylphénol).

Le type de réaction de transestérification a été très largement décrit (voir par exemple K.A. PETROV - Russian Chemical Review 35 n° 8 pages 622 à 631 - Août 1966).

Les polyphosphites peuvent également être préparés par réaction à chaud, généralement entre 80 et 200° C, du trichlorure de phosphore avec du bis-(hydroxy-4 phényl)-2,2 propane (ou bisphénol A), du (butoxy-2 éthoxy)-2 éthanol et du phénol ou un alkyllphénol, en présence d'une base comme catalyseur, telle qu'une amine par exemple.

Les nouveaux polyphosphites de l'invention peuvent être utilisés comme stabilisants des polymères halogénés et plus particulièrement des polymères chlorés, tels que le chlorure de polyvinyle (PVC) ; le polychlorure de vinylidène ; les copolymères contenant des motifs chlorure de vinyle ou des motifs chlorures de vinylidène.

Parmi ces polymères le PVC est le plus couramment utilisé.

Dans leur rôle de stabilisant des polymères halogénés, les polyphosphites de l'invention sont généralement utilisés à raison de 0,05 % à 5 % en poids par rapport au poids du polymère halogéné.

Ils sont plus particulièrement utilisés à raison de 0,1 % à 2 % en poids par rapport au polymère halogéné.

Les polyphosphites de l'invention, comme les phosphites organiques de l'art antérieur, sont des stabilisants qui sont généralement employés conjointement avec d'autres stabilisants notamment avec des stabilisants primaires.

Ainsi les compositions stabilisées à base de polymère halogéné comprennent généralement au moins un composé organique de zinc ou du cadmium associé à au moins un composé organique ou inorganique de métal alcalin ou alcalinoterreux.

Les composés organiques du zinc sont généralement préférés à ceux du cadmium en raison de la toxicité de ces derniers.

Habituellement les composés organiques du zinc ou du cadmium représentent de 0,005 % à 1 % en poids par rapport au polymère halogéné et de préférence de 0,01 % à 0,6 %.

Les composés organiques de calcium, de baryum, de magnésium et de strontium sont en général préférés parmi les composés organiques associés aux composés organiques du zinc.

Les composés organiques des différents métaux indiqués précédemment sont essentiellement des carboxylates, des phénolates, des mercaptides ou des chélates de β-dicétones de ces métaux.

Parmi les composés inorganiques de métaux alcalino-terreux, on peut citer à titre non limitatif les hydrotalcites naturelles ou les hydrotalcites obtenues par traitement des hydrotalcites naturelles. Les hydrotalcites sont des carbonates ou sulfates alcalins mixtes de magnésium et d'aluminium.

On peut utiliser en particulier les hydrotalcites décrites dans le brevet français n° 2 483 934.

Habituellement les composés organiques ou inorganiques de métaux alcalins ou alcalino-terreux définis précédemment, sont utilisés à raison de 0,005 % à 5 % en poids par rapport au polymère halogéné et de préférence à raison de 0,02 % à 2 %.

Il est possible d'améliorer la stabilisation thermique, apportée par les polyphosphites de l'invention, et éventuellement les stabilisants primaires définis précédemment, par l'adjonction d'un ou plusieurs autres stabilisants organiques.

De très nombreux stabilisants organiques des polymères halogénés sont connus.

On peut citer notamment :

- les β-cétoaldéhydes et les β-dicétones ;
- les dihydro-1,4 diméthyl-2,6 dialkoxycarbonyle-3,5 pyridines ;
- les esters de l'acide thioglycolique ;
- les diesters de l'acide thiomalique ;
- les mercaptides d'organoétain ;
- les maléates d'organoétain ;
- les esters de l'acide aminocrotonique ;
- le phényl-2 indole et ses dérivés.

Les β-dicétones et les β-cétoaldéhydes, qui sont des stabilisants organiques très efficaces, notamment pour l'inhibition du jaunissement initial des polymères halogénés, ont une action synergétique particulièrement importante avec les polyphosphites de l'invention, les composés du zinc et les composés des métaux alcalins ou alcalino-terreux indiqués précédemment.

La présente invention porte donc également plus particulièrement sur des compositions à base de polymère halogéné, stabilisées par :

- une quantité efficace d'au moins un composé organique du zinc ;
- une quantité efficace d'au moins un composé d'un métal alcalinoterreux ;

- une quantité efficace d'au moins une β-dicétone ou un β-cétoaldéhyde ;
- une quantité efficace d'au moins un polyphosphite de formule (I).

Les β-dicétones et β-cétoaldéhydes sont notamment ceux qui ont été décrits dans les brevets ou certificats d'addition français FR 2 292 227, FR 2 324 681, FR 2 351 149, FR 2 352 025, FR 2 383 988 et FR 2 456 132 et dans les brevets européens EP 0 040 286 et EP 0 046 161.

A titre d'exemples non limitatifs des β-dicétones qui peuvent être utilisées, on peut citer le benzoylstéaroylméthane, le dibenzoylméthane, le benzoylisobutanoylméthane,le benzoyl méthyl-3 butanoylméthane, les alkoxycarbonylbenzoyl-benzoyl méthanes, les bis-β-dicétones telles que le bis(acétylacéto)-1,4 butane et le bis(benzoylacéto)-1,8 octane.

La quantité de β-dicétone ou β-cétoaldéhyde utilisée peut varier très largement.

Elle peut être par exemple de 0,005 % à 5 % en poids par rapport au polymère halogéné.

Généralement on utilise de 0,01 % à 1 % en poids de β-dicétone ou β-cétoaldéhyde par rapport au polymère halogéné.

Les compositions à base de polymère halogéné et particulièrement de PVC contenant un polyphosphite de formule (I), un composé organique du zinc, un composé de métal alcalino-terreux, une β-dicétone ou un β-cétoaldéhyde définis précédemment, peuvent être encore améliorées en ce qui concerne la durée pendant laquelle la bonne coloration initiale (caractère incolore) est conservée ou peu altérée lors d'un traitement thermique. C'est ce que l'on appelle couramment la plage de travail.

En effet les β-dicétones associées aux composés du zinc et des métaux alcalino-terreux procurent d'excellents résultats au plan de la coloration initiale. L'addition des polyphosphites de formule (I) améliore la stabilité long terme (durée avant noircissement du polymère) sans dégrader la couleur initiale.

Cependant avec des formulations rigides ou semi-rigides de polymère halogéné, et plus particulièrement de PVC, il est intéressant d'allonger encore la plage de travail, afin de pallier divers incidents tels qu'une durée anormalement longue de la mise en forme à chaud, un maintien accidentel d'une partie du polymère dans l'appareillage à chaud plus long que prévu, un recyclage de polymère ayant déjà subi un traitement thermique.

Cet allongement de la plage de travail est obtenu en ajoutant aux compositions précédentes un polyol.

En général le polyol représente alors de 0,005 % à 1 % en poids par rapport au polymère halogéné et de préférence de 0,01 % à 0,6 % en poids.

Généralement il est préférable que les polyols utilisés aient un point d'ébullition supérieur à 150°C et de préférence supérieur à 170°C, à cause de la mise en oeuvre à température élevée des polymères chlorés.

A titre d'exemples de tels polyols on peut citer des triols comme le triméthylolpropane, le glycérol, l'hexanetriol-1,2,6, le butanetriol-1,2,4, le trishydroxyéthylisocyanurate ; des tétrols comme le pentaérythritol, le diglycérol ; des pentitols comme le xylitol, le tétraméthylolcyclohexanol ; des hexitols comme le mannitol, le sorbitol, le dipentaérythritol ; des polyols partiellement estérifiés par un acide carboxylique et dans la formule desquels au moins 3 fonctions hydroxyle sont libres ; des alcools polyvinyliques, notamment ceux dans lesquels il reste moins de 30 % en moles de groupes esters par rapport à l'ensemble de leurs groupes esters et hydroxyle et qui présentent une viscosité à 20°C en solution aqueuse à 4 % en poids comprise entre environ 4 x $10^{-3}$Pa.s et 60 x $10^{-3}$Pa.s.

Parmi ces polyols les préférés sont le xylitol, le mannitol, le sorbitol, le tétraméthylolcyclohexanol et les alcools polyvinyliques définis précédemment.

La stabilisation thermique conférée par les polyphosphites de formule (I) peut aussi être améliorée par l'addition de quantités efficaces d'un composé organique du zinc, d'un composé des métaux alcalins ou alcalinoterreux indiqués précédemment et de dihydro-1,4 diméthyl-2,6 dialkoxycarbonyle-3,5 pyridine, telle que notamment décrite dans les brevets FR 2 239 496, FR 2 405 974 et FR 2 405 937.

Cette stabilisation améliorée peut également être obtenue en utilisant conjointement aux polyphosphites de formule (I) et aux composés du zinc et des métaux alcalins ou alcalinoterreux :
- des esters de l'acide thioglycolique, tels que ceux décrits dans le brevet FR 2 459 816 ;
- des diesters de l'acide thiomalique, tels que ceux décrits dans le brevet EP 0 090 748 ;
- du phényl-2 indole ou ses dérivés, tels que décrits dans les brevets FR 2 273 841, FR 2 275 461 et FR 2 313 422.

On peut bien évidemment utiliser également d'autres stabilisants connus des polymères halogénés.

A titre indicatif, ces différents stabilisants organiques sont généralement efficaces à des teneurs variant de 0,01 % à 5 % en poids par rapport au polymère halogéné et de préférence de 0,05 % à 2 % en poids.

Les compositions de polymère halogéné comportant les polyphosphites de l'invention peuvent être rigides, c'est-à-dire sans plastifiant. Le plus souvent elles sont semi-rigides ou plastifiées, selon leur teneur en plastifiant. Cette teneur peut donc varier très largement. Lorsqu'un plastifiant est utilisé, généralement il représente en poids de 5 à 120 % du poids du polymère halogéné. Les plastifiants sont des composés connus. Le plus utilisé est le phtalate de dioctyle.

On peut également incorporer dans les compositions de polymère halogéné stabilisées par les polyphosphites de formule (I), et le cas échéant par les divers stabilisants indiqués précédemment, différents adjuvants habituels tels que les composés époxydés comme l'huile de soja époxydée ; les polyols ; les antioxydants phénoliques ; les agents anti-UV comme les benzophénones, les benzotriazoles ou les amines stériquement encombrées (habituellement connues sous le terme de HALS).

De manière habituelle, l'incorporation des différents stabilisants aux adjuvants est faite sur le polymère halogéné à l'état de poudre.

Toutes les méthodes usuelles connues dans ce domaine peuvent convenir pour réaliser le mélange des différents ingrédients. Par exemple l'homogénéisation de la composition polymérique peut être réalisée sur malaxeur ou sur mélangeur à rouleaux, à une température telle que la composition devienne fluide, normalement entre 150°C et 200°C pour le PVC et pendant une durée suffisante, de l'ordre de quelques minutes à quelques dizaines de minutes. Les compositions de polymère halogéné et plus particulièrement de PVC contenant les polyphosphites de formule (I), et le cas échéant les autres additifs décrits précédemment, peuvent être mises en oeuvre selon toutes les techniques utilisées habituellement comme par exemple l'extrusion ; l'injection ; l'extrusion-soufflage ; le calandrage ou le moulage par rotation.

Les exemples qui suivent illustrent la présente invention.

## EXEMPLE 1

Préparation du diphosphite de diphényle, bis((butoxy-2 éthoxy)-2 éthyle) et 4,4'-isopropylidènediphényle. (polyphosphite de formule I dans laquelle m = 1 et R = phényle) : polyphosphite P1

Dans un ballon tricol de 250 $cm^3$, équipé d'une agitation magnétique, d'une colonne à garniture Raschig surmontée d'un réfrigérant, d'une gaine thermométrique et d'une tubulure latérale d'arrivée d'azote, on charge :

| | |
|---|---|
| - triphénylphosphite | 124 g (0,4 mol) |
| - bisphénol A | 45,6 g (0,2 mol) |
| - (butoxy-2 éthoxy)-2 éthanol | 64,8 g (0,4 mol) |
| - soude broyée anhydre | 0,050 g |

Le ballon est purgé à l'azote pendant 1 heure ; puis on chauffe le mélange réactionnel à 130°C pendant 3 heures 30, sous pression atmosphérique et sous azote.

On distille ensuite le phénol formé, sous pression réduite ; tout d'abord à 130°C sous 2600 à 3300 Pa, puis en augmentant progressivement la température et en diminuant la pression, on termine à 190°C sous 400 Pa.

On distille ainsi 75,1 g de phénol à 97,3 % de pureté, soit 97 % de la quantité théorique attendue.

Après refroidissement, on obtient un mélange réactionnel fluide, limpide, très légèrement coloré en jaune, pesant 158 g.

Ce produit contient environ 0,8 % de phénol libre dosé par chromatographie en phase gazeuse. Il est utilisé tel quel pour la stabilisation du PVC.

Dosage de P : 7,70 % (théorie 7,79 %)

En utilisant le même mode opératoire on prépare d'autres polyphosphites de formule I pour lesquels :

| | | |
|---|---|---|
| - polyphosphite P2 | : | R = phényle, m = 2 ; |
| - polyphosphite P3 | : | R = phényle, m = 3 ; |
| - polyphosphite P4 | : | R = phényle, m = 5 ; |
| - polyphosphite P5 | : | R = (butoxy-2 éthoxy)-2 éthyle, m = 1 ; |
| - polyphosphite P6 | : | R = (butoxy-2 éthoxy)-2 éthyle, m = 3 ; |

## EXEMPLES 2 à 8 et ESSAIS COMPARATIFS A1 à A9

On prépare la composition de base A suivante :

| | |
|---|---|
| - PVC en poudre préparé par polymérisation en suspension et commercialisé sous la marque SOLVIC 271 GB (indice de viscosité : 120 selon la norme NF T 51013 ; K-WERT : 70) | 2.000 g |
| - phtalate de dioctyle | 520 g |
| - éthyl-2 hexanoate de zinc | 2 g |
| - stéarate de baryum | 9 g |
| - huile de soja époxydée | 60 g |
| - dibenzoylméthane | 2 g |

Après homogénéisation en mélangeur rapide à froid, on prélève 16 fractions de 129,6 g chacune de composition A (ce qui correspond à 100 g de PVC). A chaque fraction on rajoute une quantité d'un phosphite (nature et quantité indiquées dans le tableau I) de façon à obtenir, après une nouvelle homogénéisation, d'une part les compositions A1 à A9 (essais comparatifs) et d'autre part des compositions selon l'invention (exemples 2 à 8).

A partir de ces compositions, on prépare des feuilles de 1 mm d'épaisseur, par malaxage sur un mélangeur à 2 cylindres pendant 3 minutes à 180° C.

A partir d'éprouvettes (environ 1 cm x 2 cm) découpées dans ces feuilles, on effectue un test de vieillissement thermique en étuve ventilée à 180° C et l'on suit en fonction du temps l'évolution de la coloration GARDNER.

A l'exception de l'exemple 8, toutes les compositions renferment la même teneur en phosphore, de manière à obtenir une comparaison aussi objective que possible.

Le tableau I rassemble les indices de coloration GARDNER mesurés pour différentes durées de vieillissement ainsi que la durée avant noircissement total des échantillons testés.

L'examen des résultats montre :

- la disparité des résultats obtenues avec des phosphites (compositions A3 à A9) décrits dans la demande de brevet JP 78/145 634 ; certains de ces phosphites donnent des résultats inférieurs aux phosphites très courants, connus antérieurement (compositions A1 et A2)
- l'homogénéité des résultats obtenus avec les polyphosphites de l'invention (exemples 2 à 8) et la supériorité de ces produits sur les phosphites de l'art antérieur.

Remarque : l'exemple 8 a été effectué avec une même concentration pondérale que l'un des meilleurs phosphites de l'art antérieur (A8) ; la supériorité du polyphosphite de l'invention est encore vérifiée.

Abréviations utilisées dans les tableaux I, II et III pour les phosphites de l'art antérieur

Essai A5 : diphosphite de BTP, DC et IDC = diphosphite de bis(ditertiobutyl-2,4 phényl) de didécyle et de 4,4′-isopropylidènedicyclohexyle

Essai A6 : diphosphite de DP, DC et IDC = diphosphite de diphényle, de didécyle et de 4,4′-isopropylidènedicyclohexyle

Essai A7 : diphosphite de TTP et IDP = diphosphite de tétraphényle et de 4,4′-isopropylidènediphényle

Essais A8, B2, B6 : diphosphite de TTP et DOPM = diphosphite de tétraphényle et de diméthyl-2,5 oxa-3 pentaméthylène

Essai A9 : diphosphite de TKTP et IDP = diphosphite de tétrakis(ditertiobutyl-2,4 phényle) et de 4,4′-isopropylidènediphényle

| Essais | Phosphites utilisés | | Indices GARDNER en fonction du temps en min. | | | | | | | |
|---|---|---|---|---|---|---|---|---|---|---|
| | Nature | Poids en g | 0 | 10 | 20 | 30 | 45 | 60 | 80 | Noir à |
| Témoin A | néant | -- | 0 | 0 | 0 | 0 | 1 | 4 | | 75 min |
| A1 | phosphite de diphényle et de décyle | 0,40 | 0 | 0 | 0 | 0 | 0 | 0 | 1 | 105 min |
| A2 | phosphite de tri(dodécyle) | 0,62 | 0 | 0 | 0 | 0 | 0 | 0 | 1 | 100 min |
| A3 | diphosphite de tétraphényle et de trioxa-3,6,9 undécaméthylène | 0,34 | 0 | 0 | 0 | 0 | 1 | 2 | 5 | 120 min |
| A4 | diphosphite de tétraphényle et de dioxa-3,6 octaméthylène | 0,31 | 0 | 0 | 0 | 0 | 0 | 1 | 4 | 122 min |
| A5 | diphosphite de BTP, DC et IDC | 0,54 | 0 | 0 | 0 | 0 | 0 | 0 | 2 | 108 min |
| A6 | diphosphite de DP, DC et IDC | 0,42 | 0 | 0 | 0 | 0 | 0 | 0 | 3 | 103 min |
| A7 | diphosphite de TTP et IDP | 0,35 | 0 | 0 | 0 | 0 | 1 | 3 | 5 | 97 min |
| A8 | diphosphite de TTP et DOPM | 0,30 | 0 | 0 | 0 | 0 | 0 | 0 | 1 | 118 min |
| A9 | diphosphite de TKTP et IDP | 0,60 | 0 | 0 | 0 | 0 | 0 | 2 | 5 | 99 min |

TABLEAU I

| Essais | Phosphites utilisés | | Indices GARDNER en fonction du temps en min. | | | | | | | |
|---|---|---|---|---|---|---|---|---|---|---|
| | Nature | Poids en g | 0 | 10 | 20 | 30 | 45 | 60 | 80 | Noir à |
| Ex. 2 | polyphosphite P1 | 0,42 | 0 | 0 | 0 | 0 | 0 | 0 | 0 | 125 min |
| Ex. 3 | polyphosphite P2 | 0,43 | 0 | 0 | 0 | 0 | 0 | 0 | 0 | 130 min |
| Ex. 4 | polyphosphite P3 | 0,43 | 0 | 0 | 0 | 0 | 0 | 0 | 0 | 135 min |
| Ex. 5 | polyphosphite P4 | 0,44 | 0 | 0 | 0 | 0 | 0 | 0 | 0,5 | 137 min |
| Ex. 6 | polyphosphite P5 | 0,49 | 0 | 0 | 0 | 0 | 0 | 0 | 0 | 123 min |
| Ex. 7 | polyphosphite P6 | 0,47 | 0 | 0 | 0 | 0 | 0 | 0 | 0 | 135 min |
| Ex. 8 | polyphosphite P1 | 0,30 | 0 | 0 | 0 | 0 | 0 | 0 | 0,5 | 120 min |

<u>TABLEAU</u> <u>I</u> (suite)

EXEMPLE 9 et ESSAIS COMPARATIFS B1 ET B2

On prépare la composition de base B suivante :

| | | |
|---|---|---|
| - PVC utilisé dans les exemples 2 à 8 | : | 1.000 g |
| - phtalate de dioctyle | : | 480 g |
| - éthyl-2 hexanoate de zinc | : | 1 g |
| - paratertiobutylbenzoate de baryum | : | 4,5 g |
| - huile de soja époxydée | : | 15 g |

On prélève 3 fractions de 150,05 g chacune (ce qui correspond à 100 g de PVC) de la composition B et, en opérant comme dans les exemples 2 à 8, on prépare d'une part les compositions B1 et B2 (essais comparatifs) et d'autre part une composition selon l'invention (exemple 9).

On soumet ces différentes compositions au test de vieillissement indiqué précédemment.

Le tableau II ci-après rassemble les indications concernant les phosphites utilisés ainsi que les indices de coloration GARDNER et les durées avant noircissement des échantillons.

On observe à nouveau la supériorité des polyphosphites de l'invention par rapport aux phosphites de l'art antérieur.

TABLEAU II

| Essais | Phosphites utilisés | | Indices GARDNER en fonction du temps en min. | | | | | | | |
|---|---|---|---|---|---|---|---|---|---|---|
| | Nature | Poids en g | 0 | 10 | 20 | 30 | 45 | 60 | 80 | Noir à |
| Témoin B | néant | -- | 0 | 1 | 2 | 3 | 4 | 6 | 6 | 85 min |
| B1 | phosphite de tri(dodécyle) | 0,62 | 0 | 0,5 | 0,5 | 1 | 1 | 2 | 3 | 95 min |
| B2 | diphosphite de TTP et DOPM | 0,30 | 0 | 0,5 | 0,5 | 1 | 1 | 2 | 2 | 110 min |
| Ex. 9 | polyphosphite P1 | 0,42 | 0 | 0 | 0,5 | 0,5 | 0,5 | 1 | 2 | 120 min |

EXEMPLES 10 et 11 et essais comparatifs B3 à B6

On prélève 6 fractions de 150,05 g chacune (ce qui correspond à 100 g de PVC) de la composition B ; à chacune d'elle on ajoute 0,1 g de dibenzoylméthane, puis en opérant comme dans les exemples 2 à 8, on prépare d'une part les compositions B3 à B6 (témoin et essais comparatifs) et d'autre part des compositions selon l'invention (exemples 10 et 11).

On soumet ces différentes compositions au test de vieillissement indiqué précédemment.

Le tableau III ci-après rassemble les indications concernant les phosphites utilisés ainsi que les indices de coloration GARDNER et les durées avant noircissement des échantillons.

On observe à nouveau la supériorité des polyphosphites de l'invention par rapport aux phosphites de l'art antérieur, en présence de β-dicétone.

TABLEAU III

| Essais | Phosphites utilisés | | Indices GARDNER en fonction du temps en min. | | | | | | | |
|---|---|---|---|---|---|---|---|---|---|---|
| | Nature | Poids en g | 0 | 10 | 20 | 30 | 45 | 60 | 80 | Noir à |
| Témoin B3 | néant | -- | 0 | 0 | 0 | 0 | 1 | 1 | 3 | 81 min |
| B4 | phosphite de didécyle et de phényle | 0,40 | 0 | 0 | 0 | 0 | 0 | 0 | 1 | 100 min |
| B5 | phosphite de tri(dodécyle) | 0,62 | 0 | 0 | 0 | 0 | 0 | 0 | 1 | 90 min |
| B6 | diphosphite de TTP et DOPM | 0,30 | 0 | 0 | 0 | 0 | 0 | 0,5 | 0,5 | 105 min |
| Ex. 10 | polyphosphite P1 | 0,42 | 0 | 0 | 0 | 0 | 0 | 0 | 0 | 115 min |
| Ex. 11 | polyphosphite P5 | 0,49 | 0 | 0 | 0 | 0 | 0 | 0 | 0 | 115 min |

Exemples 12 à 16 et essais comparatifs C1 à C4

On prépare la composition de base C suivante :

| | | |
|---|---|---|
| - PVC en poudre préparé par polymérisation ou suspension et commercialisé sous la marque LACQVYL SO 71 S (indice de viscosité selon la norme NF T 51013:80) | : | 1.000 g |
| - renforçateur de choc (copolymère butadiène/styrène/méthacrylate de méthyle) | : | 80 g |
| - lubrifiant à base d'ester de colophane (cire E) | : | 5 g |
| - huile de soja époxydée | : | 20 g |
| - stéarate de calcium | : | 3 g |
| - stéarate de zinc | : | 2,5 g |

Après homogénéisation en mélangeur rapide à froid, on prélève 9 fractions de cette composition C. A chaque fraction on ajoute une quantité de stéaroylbenzoylméthane et/ou de polyphosphite P1 et/ou d'un polyol. La nature du polyol ainsi que les quantités en poids pour 100 g de PVC des différents stabilisants sont indiquées dans le tableau IV ci-après.

On prépare à l'aide des différentes compositions ainsi obtenues, ainsi qu'avec la composition C non modifiée, des feuilles de 1 mm d'épaisseur par malaxage sur un mélangeur à 2 cylindres pendant 3 min à 180°C.

A partir d'éprouvettes (environ 1 cm x 2 cm) découpées dans ces feuilles, on effectue un test de vieillissement thermique en étuve ventilée à 180°C et l'on suit en fonction du temps l'évolution de la coloration GARDNER.

Le tableau IV rassemble les indices de coloration GARDNER mesurés pour différentes durées de vieillissement ainsi que la durée avant noircissement total des échantillons testés.

L'examen des résultats montre que dans les compositions de l'invention, l'addition supplémentaire d'un polyol minimise encore l'évolution de la coloration du polymère, lors du traitement thermique.

| Essais | Stabilisants utilisés | | Indices GARDNER en fonction du temps en min. | | | | | | | |
|---|---|---|---|---|---|---|---|---|---|---|
| | Nature | Poids en g | 0 | 10 | 20 | 30 | 40 | 50 | 60 | Noir à |
| Témoin C | néant | -- | 5 | 6 | 7 | 7 | 7 | 8 | 9 | 72 min |
| C1 | Stéaroylbenzoylméthane | 0,30 | 0 | 0 | 0 | 2 | 4 | 5 | 9 | 70 min |
| C2 | Stéaroylbenzoylméthane<br>Mannitol | 0,30<br>0,07 | 0 | 0,5 | 0,5 | 2 | 4 | 5 | 6 | 100 min |
| C3 | Stéraoylbenzoylméthane<br>Tétraméthylolcyclohexanol | 0,30<br>0,11 | 0 | 0 | 0,5 | 2 | 3,5 | 6 | 6 | 89 min |
| C4 | Stéraoylbenzoylméthane<br>Xylitol | 0,30<br>0,07 | 0 | 0,5 | 0,5 | 2 | 4 | 5 | 6 | 88 min |

TABLEAU IV

| Essais | Stabilisants utilisés | | Indices GARDNER en fonction du temps en min. | | | | | | | |
|---|---|---|---|---|---|---|---|---|---|---|
| | Nature | Poids en g | 0 | 10 | 20 | 30 | 40 | 50 | 60 | Noir à |
| Ex 12 | polyphosphite P1 | 0,30 | 2 | 3 | 3 | 3 | 3 | 5 | 9 | 65 min |
| Ex 13 | Stéaroylbenzoylméthane<br>Polyphosphite P1 | 0,30<br>0,30 | 0 | 0 | 0 | 1 | 2 | 5 | 9 | 65 min |
| Ex 14 | Stéaroylbenzoylméthane<br>Polyphosphite P1<br>Mannitol | 0,30<br>0,30<br>0,07 | 0 | 0 | 0 | 0 | 0,5 | 3 | 4 | 75 min |
| Ex 15 | Stéaroylbenzoylméthane<br>Polyphosphite P1<br>Tétraméthylolcyclohexanol | 0,30<br>0,30<br>0,11 | 0 | 0 | 0 | 0 | 0 | 3 | 4 | 75 min |
| Ex 16 | Stéraoylbenzoylméthane<br>Polyphosphite P1<br>Xylitol | 0,30<br>0,30<br>0,07 | 0 | 0 | 0 | 0 | 0,5 | 3 | 4 | 72 min |

TABLEAU IV (suite)

**Revendications**

1. Polyphosphites de formule générale (I)

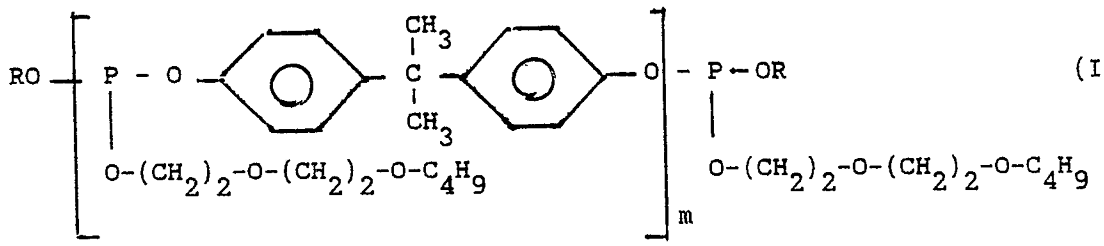

(I)

dans laquelle :
- m représente un nombre de 1 à 10 ;
- R représente :
. un radical (butoxy-2 éthoxy)-2 éthyle
. un radical phényle
. un radical alkylphényle, le ou les substituants alkyles ayant 1 à 12 atomes de carbone.

2. Polyphosphites selon la revendication 1, de formule générale (I) dans laquelle :
- m représente un nombre de 1 à 5 ;
- R représente :
. un radical (butoxy-2 éthoxy)-2 éthyle
. un radical phényle
. un radical phényle portant 1 ou 2 substituants méthyle, éthyle, propyle, isopropyle, n-butyle, isobutyle, tertiobutyle, hexyles, octyles, nonyles, décyles et dodécyles.

3. Polyphosphites selon l'une des revendications 1 ou 2, choisis parmi :
- le diphosphite de diphényle, bis((butoxy-2 éthoxy)-2 éthyle) et 4,4'-isopropylidènediphényle ;
- le diphosphite de tétrakis((butoxy-2 éthoxy)-2 éthyle) et 4,4'-isopropylidènediphényle ;
- le triphosphite de diphényle, tris((butoxy-2 éthoxy)-2 éthyle) et bis(4,4'-isopropylidènediphényle) ;
- le tétraphosphite de diphényle, tétrakis((butoxy-2 éthoxy)-2 éthyle) et tris(4,4'-isopropylidènediphényle) ;
- le pentaphosphite de diphényle, pentakis((butoxy-2 éthoxy)-2 éthyle) et tétrakis(4,4'-isopropylidènediphényle) ;
- l'hexaphosphite de diphényle, hexakis((butoxy-2 éthoxy)-2 éthyle) et pentakis(4,4'-isopropylidènediphényle) ;
- le triphosphite de pentakis((butoxy-2 éthoxy)-2 éthyle) et bis(4,4'-isopropylidènediphényle) ;
- le tétraphosphite d'hexakis((butoxy-2 éthoxy)-2 éthyle) et tris(4,4'-isopropylidènediphényle) ;
- le diphosphite de bis(ditertiobutyl-2,4 phényle), bis((butoxy-2 éthoxy)-2 éthyle) et 4,4'-isopropylidènediphényle ;
- le diphosphite de bis(ditertiobutyl-2,6 phenyle), bis((butoxy-2 éthoxy)-2 éthyle) et 4,4'-isopropylidènediphényle.

4. Composition stabilisée à base de polymères halogénés, et de préférence de polymères chlorés comprenant le chlorure de polyvinyle, le polychlorure de vinylidène, les copolymères contenant des motifs chlorure de vinyle ou des motifs chlorure de vinylidène, caractérisée en ce qu'elle contient au moins un polyphosphite selon l'une des revendications 1 à 3.

5. Composition stabilisée selon la revendication 4, caractérisée en ce qu'elle contient de 0,05 % à 5 % en poids de polyphosphite par rapport au poids de polymère halogéné.

6. Composition stabilisée selon l'une des revendications 4 ou 5, caractérisée en ce qu'elle contient au moins un composé organique de zinc ou de cadmium associé à au moins un composé organique ou inorganique de métal alcalin ou alcalinoterreux.

7. Composition selon la revendication 6, caractérisée en ce qu'elle comprend de 0,005 % à 1 % en poids de composé organique du zinc ou du cadmium par rapport au polymère halogéné, et de préférence de 0,01 % à 0,6 %.

8. Composition selon l'une des revendications 6 ou 7, caractérisée en ce qu'elle comprend de 0,005 % à 5 % en poids de composé organique ou inorganique de métal alcalin ou alcalinoterreux par rapport au polymère halogéné, et de préférence de 0,02 % à 2 %.

9. Composition selon l'une des revendications 4 à 8, caractérisée en ce qu'elle comprend au moins un stabilisant organique choisi parmi :
- les β-cétoaldéhydes et les β-dicétones ;
- les dihydro-1,4 diméthyl-2,6 dialkoxycarbonyle-3,5 pyridines ;
- les esters de l'acide thioglycolique ;
- les diesters de l'acide thiomalique ;

- les mercaptides d'organoétain ;
- les maléates d'organoétain ;
- les esters de l'acide aminocrotonique ;
- le phényl-2 indole et ses dérivés.

10. Composition selon l'une des revendications 4 à 9, caractérisée en ce qu'elle comprend :
- une quantité efficace d'au moins un composé organique du zinc ;
- une quantité efficace d'au moins un composé d'un métal alcalinoterreux ;
- une quantité efficace d'au moins une β-dicétone ou un β-cétoaldéhyde ;
- une quantité efficace d'au moins un polyphosphite de formule (I).

11. Composition selon la revendications 10, caractérisée en ce qu'elle comprend de 0,005 % à 5 % en poids de β-dicétone ou β-cétoaldéhyde par rapport au polymère halogéné, et de préférence de 0,01 % à 1 %.

12. Composition selon l'une des revendications 10 ou 11, caractérisée en ce qu'elle comprend un polyol choisi parmi les polyols ayant un point d'ébullition supérieur à 150° C et de préférence supérieur à 170° C, représentant de 0,005 % à 1 % en poids par rapport au polymère halogéné et de préférence de 0,01 % à 0,6 % en poids.

13. Composition selon l'une des revendications 10 à 12, caractérisée en ce qu'elle comprend un polyol choisi parmi les triols comme le triméthylolpropane, le glycérol, l'hexanetriol-1,2,6, le butanetriol-1,2,4, le trishydroxyéthylisocyanurate ; les tétrols comme le pentaérythritol, le diglycérol ; les pentitols comme le xylitol, le tétraméthylolcyclohexanol ; les hexitols comme le mannitol, le sorbitol, le dipentaérythritol ; les polyols partiellement estérifiés par un acide carboxylique et dans la formule desquels au moins 3 fonctions hydroxyle sont libres ; les alcools polyvinyliques, notamment ceux dans lesquels il reste moins de 30 % en moles de groupes esters par rapport à l'ensemble de leurs groupes esters et hydroxyle et qui présentent une viscosité à 20° C en solution aqueuse à 4 % en poids comprise entre environ 4 x $10^{-3}$Pa.s et 60 x $10^{-3}$Pa.s.

**Revendications pour l'Etat contractant suivant:ES**

1. Procédé de préparation de polyphosphites de formule générale (I)

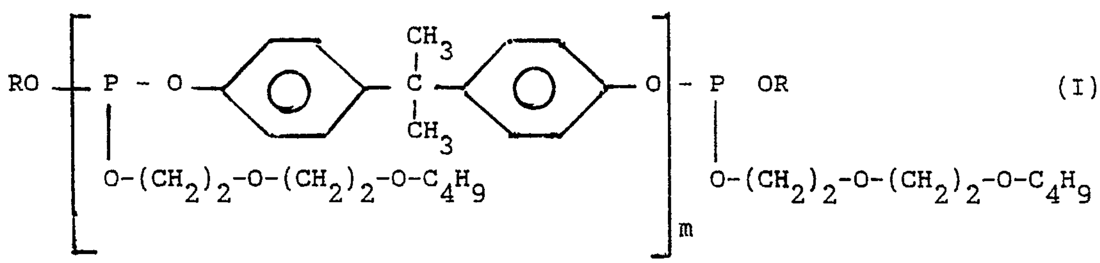

(I)

dans laquelle :
- m représente un nombre de 1 à 10 ;
- R représente :
. un radical (butoxy-2 éthoxy)-2 éthyle
. un radical phényle
. un radical alkylphényle, le ou les substituants alkyles ayant 1 à 12 atomes de carbone,

caractérisé en ce que l'on fait réagir à chaud, généralement entre 80 et 200°C, du trichlorure de phosphore avec du bis-(hydroxy-4 phényl)-2,2 propane (ou bisphénol A), du (butoxy-2 éthoxy)-2 éthanol et du phénol ou un alkyllphénol, en présence d'une base comme catalyseur, telle qu'une amine.

2. Procédé de préparation de polyphosphites de formule générale (I)

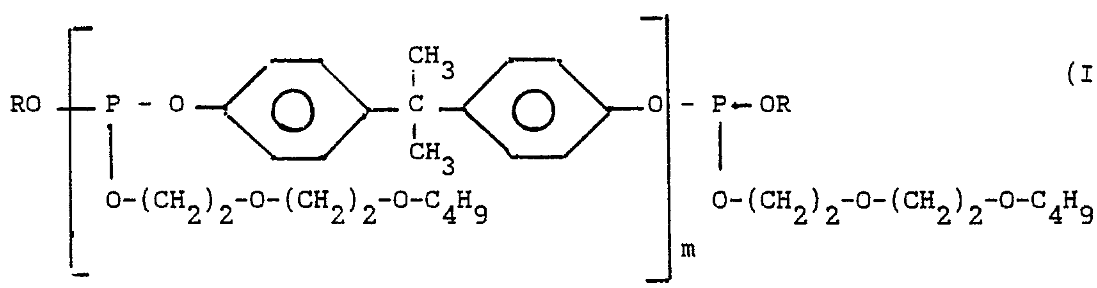

(I)

dans laquelle :
- m représente un nombre de 1 à 10 ;
- R représente :
. un radical (butoxy-2 éthoxy)-2 éthyle
. un radical phényle

. un radical alkylphényle, le ou les substituants alkyles ayant 1 à 12 atomes de carbone,
caractérisé en ce que l'on fait réagir à chaud, généralement entre 80 et 200° C, un phosphite de triphényle, avec du bis-(hydroxy-4 phényl)-2,2 propane (ou bisphénol A) et du (butoxy-2 éthoxy)-2 éthanol et éventuellement un alkylphénol, en présence d'un catalyseur de transestérification.

3. Procédé selon la revendication 2 de préparation de polyphosphites de formule générale (I) dans laquelle :
- m représente un nombre de 1 à 5 ;
- R représente :
. un radical (butoxy-2 éthoxy)-2 éthyle
. un radical phényle
. un radical phényle portant 1 ou 2 substituants méthyle, éthyle, propyle, isopropyle, n-butyle, isobutyle, tertiobutyle, hexyles, octyles, nonyles, décycles et dodécycles,
caractérisé en ce que l'on fait réagir entre 80 et 200° C, un phosphite de triphényle, avec du bis-(hydroxy-4 phényl)-2,2 propane (ou bisphénol A) et du (butoxy-2 éthoxy)-2 éthanol et éventuellement un alkylphénol portant 1 ou 2 substituants méthyle, éthyle, propyle, isopropyle, n-butyle, isobutyle, tertiobutyle, hexyles, octyles, nonyles, décyles et dodécyles, en présence d'un catalyseur de transestérification.

4. Procédé selon l'une des revendications 2 ou 3, de préparation de polyphosphites choisis parmi :
- le diphosphite de diphényle, bis((butoxy-2 éthoxy)-2 éthyle) et 4,4′-isopropylidènediphényle ;
- le diphosphite de tétrakis((butoxy-2 éthoxy)-2 éthyle) et 4,4′-isopropylidènediphényle ;
- le triphosphite de diphényle, tris((butoxy-2 éthoxy)-2 éthyle) et bis(4,4′-isopropylidènediphényle) ;
- le tétraphosphite de diphényle, tétrakis((butoxy-2 éthoxy)-2 éthyle) et tris(4,4′-isopropylidènediphényle) ;
- le pentaphosphite de diphényle, pentakis((butoxy-2 éthoxy)-2 éthyle) et tétrakis(4,4′-isopropylidènediphényle) ;
- l'hexaphosphite de diphényle, hexakis((butoxy-2 éthoxy)-2 éthyle) et pentakis(4,4′-isopropylidènediphényle) ;
- le triphosphite de pentakis((butoxy-2 éthoxy)-2 éthyle) et bis(4,4′-isopropylidènediphényle) ;
- le tétraphosphite d'hexakis((butoxy-2 éthoxy)-2 éthyle) et tris(4,4′-isopropylidènediphényle) ;
- le diphosphite de bis(ditertiobutyl-2,4 phényle), bis ((butoxy-2 éthoxy)-2 éthyle) et 4,4′-isopropylidènediphényle ;
- le diphosphite de bis(ditertiobutyl-2,6 phényle), bis((butoxy-2 éthoxy)-2 éthyle) et 4,4′-isopropylidènediphényle,
caractérisé en ce que l'on fait réagir entre 80 et 200° C, un phosphite de triphényle, avec du bis-(hydroxy-4 phényl)-2,2 propane (ou bisphénol A) et du (butoxy-2 éthoxy)-2 éthanol et éventuellement du ditertiobutyl-2,6 phénol, en présence d'un catalyseur de transestérification.

5. Procédé de stabilisation de polymères halogénés, et de préférence de polymères chlorés comprenant le chlorure de polyvinyle, le polychlorure de vinylidène, les copolymères contenant des motifs chlorure de vinyle ou des motifs chlorure de vinylidène, caractérisé en ce que l'on fair réagir lesdits polymères avec au moins un polyphosphite obtenu selon l'une des revendications 1 à 4, à une température de 150 à 200° C.

6. Procédé de stabilisation selon la revendication 5, caractérisé en ce que l'on utilise de 0,05 % à 5 % en poids de polyphosphite par rapport au poids de polymère halogéné.

7. Procédé de stabilisation selon l'une des revendications 5 ou 6, caractérisé en ce que l'on utilise au moins un composé organique de zinc ou de cadmium associé à au moins un composé organique ou inorganique de métal alcalin ou alcalinoterreux.

8. Procédé de stabilisation selon la revendication 7, caractérisé en ce que l'on utilise de 0,005 % à 1 % en poids de composé organique du zinc ou du cadmium par rapport au polymère halogéné, et de préférence de 0,01 % à 0,6 %.

9. Procédé de stabilisation selon l'une des revendications 7 ou 8, caractérisé en ce que l'on utilise de 0,005 % à 5 % en poids de composé organique ou inorganique de métal alcalin ou alcalinoterreux par rapport au polymère halogéné, et de préférence de 0,02 % à 2 %.

10. Procédé de stabilisation selon l'une des revendications 5 à 9, caractérisé en ce que l'on utilise au moins un stabilisant organique choisi parmi :
- les β-cétoaldéhydes et les β-dicétones ;
- les dihydro-1,4 diméthyl-2,6 dialkoxycarbonyle-3,5 pyridines ;
- les esters de l'acide thioglycolique ;
- les diesters de l'acide thiomalique ;
- les mercaptides d'organoétain ;
- les maléates d'organoétain ;
- les esters de l'acide aminocrotonique ;
- le phényl-2 indole et ses dérivés.

11. Procédé de stabilisation selon l'une des revendications 5 à 10, caractérisé en ce que l'on utilise :
- une quantité efficace d'au moins un composé organique du zinc ;
- une quantité efficace d'au moins un composé d'un métal alcalinoterreux ;
- une quantité efficace d'au moins une β-dicétone ou un β-cétoaldéhyde ;

- une quantité efficace d'au moins un polyphosphite de formule (I).

12. Procédé de stabilisation selon la revendication 11, caractérisé en ce qu'elle comprend de 0,005 % à 5 % en poids de β-dicétone ou β-cétoaldéhyde par rapport au polymère halogéné, et de préférence de 0,01 % à 1 %.

13. Procédé de stabilisation selon l'une des revendications 11 ou 12, caractérisé en ce qu'elle comprend un polyol choisi parmi les polyols ayant un point d'ébullition supérieur à 150° C et de préférence supérieur à 170° C, représentant de 0,005 % à 1 % en poids par rapport au polymère halogéné et de préférence de 0,01 % à 0,6 % en poids.

14. Procédé de stabilisation selon l'une des revendications 11 à 13, caractérisé en ce que l'on utilise un polyol choisi parmi les triols comme le triméthylolpropane, le glycérol, l'hexanetriol-1,2,6, le butanetriol-1,2,4, le trishydroxyéthylisocyanurate ; les tétrols comme le pentaérythritol, le diglycérol ; les pentitols comme le xylitol, le tétraméthylolcyclohexanol ; les hexitols comme le mannitol, le sorbitol, le dipentaérythritol ; les polyols partiellement estérifiés par un acide carboxylique et dans la formule desquels au moins 3 fonctions hydroxyle sont libres ; les alcools polyvinyliques, notamment ceux dans lesquels il reste moins de 30 % en moles de groupes esters par rapport à l'ensemble de leurs groupes esters et hydroxyle et qui présentent une viscosité à 20° C en solution aqueuse à 4 % en poids comprise entre environ $4 \times 10^{-3}$ Pa.s et $60 \times 10^{-3}$ Pa.s.

Office européen des brevets

# RAPPORT DE RECHERCHE EUROPEENNE

Numero de la demande

EP 89 42 0228

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | CHEMICAL ABSTRACTS, vol. 89, no. 14, 2 octobre 1978, page 79, no. 111382h, Columbus, Ohio, US; & JP-A-78 40 746 (SAKAI CHEMICAL INDUSTRY CO., LTD, SAKAI) 13-04-1978<br>* Résumé *<br>--- | 1-13 | C 07 F 9/145<br>C 08 G 79/04<br>C 08 L 27/04<br>C 08 K 5/52 |
| X | CHEMICAL ABSTRACTS, vol. 103, no. 24, 16 décembre 1985, page 38, no. 196923r, Columbus, Ohio, US; & JP-A-60 135 445 (KATSUTA KAKO CO., LTD) 18-07-1985<br>* Résumé *<br>--- | 1-13 | |
| Y | GB-A-1 414 513 (SUMITOMO CHEMICAL CO., LTD)<br>* Page 1, lignes 41-68; page 2, tableau 1; page 8, revendication 10 *<br>----- | 1-13 | |
| | | | **DOMAINES TECHNIQUES RECHERCHES (Int. Cl.4)** |
| | | | C 07 F 9/00 |

Le présent rapport a été établi pour toutes les revendications

| Lieu de la recherche | Date d'achèvement de la recherche | Examinateur |
|---|---|---|
| LA HAYE | 26-09-1989 | BESLIER L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)